# DEMANDE DE BREVET EUROPEEN

(11) **EP 1 061 721 A1**
(43) Date de publication de la demande: **20.12.2000**
(21) Numéro de dépôt: 99440149.5
(22) Date de dépôt: 18.06.1999
(51) Int. Cl.: H04M 3/30, H04M 1/738

(54) **Dispositif d'estimation d'impédance de ligne et terminal de télécommunication analogique électriquement isolé utilisant ce dispositif en vue de la régulation d'efficacité**

(71) Demandeur: ALCATEL, 75008 Paris (FR)
(72) Inventeur: Gomes, Jean-Marc, 67400 Illkirch (FR); Ananikian Daniel, 67200 Strasbourg (FR)
(74) Mandataire: Brose, Gerhard, Dipl.-Ing.

(57) **Abrégé**

L'invention concerne notamment un dispositif d'estimation d'impédance d'une ligne téléphonique, destiné à être connecté à une extrémité de celle ci, comprenant des éléments d'isolation 14, 15, un moyen de traitement 12 et un moyen de gestion 13, les éléments d'isolation étant situés entre le moyen de traitement et le moyen de gestion, une grandeur électrique de valeur connue à l'extrémité distante de la ligne étant accessible à l'autre extrémité de la ligne.

Selon l'invention, l'impédance de la ligne est représentée par une durée mesurée par le moyen de gestion 13, l'instant de début de la mesure correspondant à l'application de la grandeur électrique au moyen de traitement 12 comportant un circuit 121 présentant une réponse univoque en fonction du temps suivi d'un détecteur à seuil 122, l'instant de fin étant déterminé par un front généré par le détecteur à seuil et reçu par le moyen de gestion 13.

## Description

Le domaine de l'invention est celui de l'estimation d'impédance d'une ligne téléphonique ainsi que de l'utilisation de cette information en vue de la régulation d'efficacité dans un terminal de télécommunication analogique. La régulation d'efficacité est mise en oeuvre afin de corriger, au niveau d'un terminal de télécommunication, les atténuations subies par le signal analogique, lors de sa propagation dans la ligne téléphonique. Les lignes présentent en effet une certaine impédance linéique qui a pour conséquence d'atténuer d'autant plus le signal que la longueur de ligne, entre le terminal et le central téléphonique ou le PABX dont il dépend, est grande. La correction au niveau du terminal est réalisée grâce à une amplification du signal qui compense la perte en ligne. La qualité d'écoute de l'utilisateur est, grâce à ce principe, indépendante de l'éloignement de l'utilisateur du central ou du PABX dont il dépend.

De manière courante l'estimation d'impédance est simplement réalisée en mesurant une grandeur électrique, courant ou tension, en bout de ligne. Cette grandeur électrique provient en général de l'application d'une grandeur électrique connue, en général une tension constante, à l'autre bout de la ligne au niveau du central téléphonique ou du PABX, cette grandeur électrique étant destinée entre autre à alimenter à distance un terminal connecté à la ligne. La grandeur électrique étant connue à chaque extrémité de la ligne, l'impédance de la ligne peut en être déduite directement. Elle est d'autant plus élevée que la ligne est longue.

Le mécanisme de régulation d'efficacité est mis en oeuvre de manière courante dès la prise de ligne en déterminant, au niveau du terminal, l'impédance de la ligne grâce à la méthode exposée ci-dessus. La valeur d'impédance est confrontée à une table de conversion définissant la valeur du gain à appliquer au signal tout au long de la conversation téléphonique. Cette opération est en général réalisée dans une CPU qui gère également l'application du gain au signal.

Un terminal de télécommunication relié de surcroît à une prise électrique doit en général être soumis à une isolation électrique vis à vis de la ligne téléphonique à laquelle il est connecté. L'absence d'une telle isolation électrique causerait l'apparition de courants parasites circulant dans le terminal et provenant de l'interaction entre l'alimentation à distance du terminal par la ligne téléphonique et l'alimentation du terminal par la prise secteur. Des perturbations électromagnétiques ou des masses non équipotentielles sont à l'origine de ces courants parasites, qui détériorent la qualité d'écoute au niveau du terminal. La réalisation de l'isolation électrique vis-à-vis de la ligne téléphonique repose généralement sur l'introduction de transformateurs ou d'optocoupleurs dans le terminal au niveau de l'interface de ligne téléphonique. Le principe de ces éléments d'isolation est de transformer une tension reçue au niveau du circuit primaire en une tension en dépendant linéairement au niveau du circuit secondaire. Néanmoins, les contraintes concernant les coûts de fabrication de tels composants, notamment optocoupleurs, impliquent que ceux-ci ont une précision réduite et présentent une dispersion telle que le facteur de multiplication entre le primaire et le secondaire varie parfois du simple au double d'un composant à l'autre. Dans de telles conditions, la tension, résultant de l'alimentation à distance du terminal, recueillie dans le terminal au delà de l'élément d'isolation, est inexploitable pour estimer précisément l'impédance de la ligne et le gain à appliquer. L'estimation d'impédance doit, en présence d'éléments d'isolation électrique, tenir compte de cette particularité.

Dans l'état de l'art, une possible solution à ce problème consiste, grâce à un effet de rétroaction, à s'affranchir de la dispersion des composants. Pour cela, on utilise un optocoupleur comportant une diode dans le circuit primaire et deux diodes dans le circuit secondaire. L'inconvénient de cette solution repose néanmoins dans sa complexité et l'utilisation de composants plus coûteux.

La présente invention a notamment pour objectif de présenter un dispositif d'estimation de l'impédance d'une ligne téléphonique, l'information représentant la valeur de l'impédance devant être transmise au travers d'un élément d'isolation électrique tout en étant affranchie de la dispersion inhérente aux éléments d'isolation.

Un autre objectif de la présente invention est d'utiliser un tel dispositif afin de réaliser la régulation d'efficacité dans un terminal de télécommunication électriquement isolé en s'affranchissant de la dispersion inhérente aux éléments d'isolation.

Ces objectifs, ainsi que d'autres qui apparaîtront par la suite, sont atteints grâce à un dispositif d'estimation d'impédance de ligne utilisant la grandeur électrique provenant de l'alimentation à distance et comprenant un moyen de gestion relié à un moyen de traitement au travers d'éléments d'isolations, coopérant de la manière suivante :
Le moyen de gestion est destiné à délivrer un premier signal au moyen de traitement déterminant ainsi l'instant de début d'une mesure de durée par le moyen de gestion et correspondant avec l'instant de début d'application de la grandeur électrique provenant de l'alimentation à distance au moyen de traitement ;
le moyen de traitement comprend :
- un premier circuit présentant une réponse univoque à la grandeur électrique lui étant appliquée en fonction du temps,
- un comparateur comparant ladite réponse par rapport à un seuil prédéfini
le comparateur génère un second signal en direction du moyen de gestion lorsque le seuil est atteint, ce qui détermine l'instant de fin de la mesure de temps. Le temps mesuré est alors représentatif de l'impédance de ligne.

Préférentiellement, les premier et second signaux sont des fronts de courant ou de tension destinés à être transmis au travers d'optocouleurs.

Préférentiellement, ce dispositif d'estimation d'impédance est utilisé dans un terminal de télécommunication analogique isolé électriquement afin de réaliser la régulation d'efficacité ; le temps mesuré par le dispositif d'estimation d'impédance étant converti en une valeur de contrôle de gain appliquée au signal provenant de la ligne téléphonique.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 représente le dispositif d'estimation d'impédance selon l'invention positionné en bout d'une ligne téléphonique ;
- la figure 2 représente un terminal de télécommunication électriquement isolé, relié à une ligne téléphonique et comportant un dispositif d'estimation d'impédance selon l'invention, en vue de la mise en oeuvre du mécanisme de régulation d'efficacité.

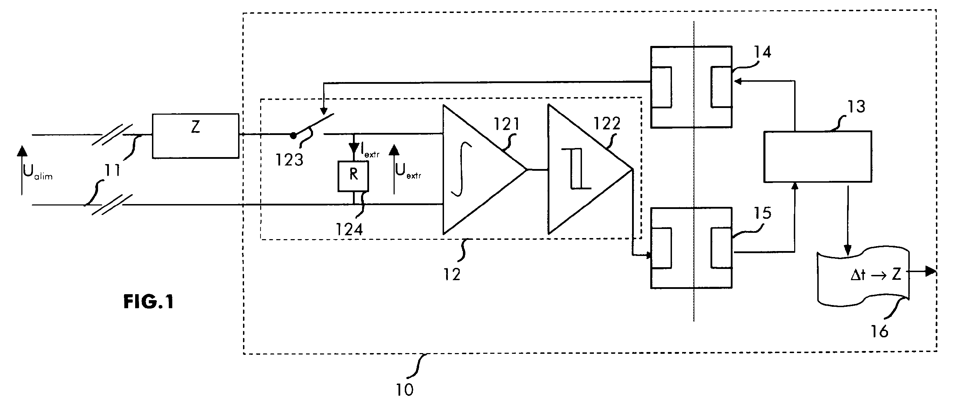

La figure 1 représente un dispositif d'estimation d'impédance 10 selon l'invention connecté en bout d'une ligne téléphonique 11 bifilaire présentant une impédance répartie le long de la ligne. Une tension connue et constante Ualim est appliquée à l'extrémité distante de la ligne. Un moyen de traitement 12 du dispositif d'estimation d'impédance 10 est directement connecté à la ligne 11. Le moyen de traitement 12 est relié à un moyen de gestion 13 par l'intermédiaire d'un élément d'isolation 15. Le moyen de gestion 13 est lui même relié au moyen de traitement 12 par l'intermédiaire d'un élément d'isolation 14. Le moyen de gestion 13 est relié à un moyen de conversion 16. Le moyen de gestion 13 et le moyen de conversion 16 sont électriquement isolé par les éléments d'isolation 14 et 15 du moyen de traitement 12 et de la ligne 11. Les moyen d'isolateur 14 et 15 sont dans cet exemple de réalisation des optocoupleurs.

Le moyen de traitement 12 comporte une interrupteur 123, par défaut en position ouverte, permettant d'établir à un moment donné le contact électrique entre la ligne 11 et un moyen de mesure 124 qui peut être constitué par une résistance aux bornes de laquelle se retrouve la tension Uextr découlant de l'atténuation de la tension Ualim de par l'existence de l'impédance répartie sur la ligne 11. A partir de l'instant où l'interrupteur 123 est fermé, la tension Uextr est appliquée en entrée d'un circuit 121 présentant une réponse univoque à ladite tension en fonction du temps. La réponse en sortie du circuit 121 est elle même appliquée à un comparateur à seuil 122 qui génère un signal lorsqu'un seuil prédéfini est atteint par la réponse en sortie du circuit 121. Le comparateur à seuil 122 est relié à l'élément d'isolation 15.

Le fonctionnement du dispositif d'estimation d'impédance 10 repose sur la mesure, par le moyen de gestion 13, d'une durée comprise entre l'instant de génération par le moyen de gestion 13 d'un premier signal fermant l'interrupteur 123 et l'instant de réception d'un second signal par le moyen de gestion 13, le second signal étant généré par le comparateur à seuil 122 lorsque la tension, représentant la réponse au circuit 121, a atteint un seuil prédéfini. Le circuit 121 peut avantageusement être un intégrateur de tension. La durée ainsi mesurée est alors soumise au moyen de conversion 16 qui la convertit en l'impédance de ligne correspondante.

Le seuil prédéfini du comparateur à seuil est avantageusement choisi de telle sorte que le seuil soit atteint dans un domaine où la réponse au circuit 121 est dans sa phase linéaire.

Le premier signal est constitué par un front montant ou descendant de tension. La tension passant à cet instant d'une valeur proche de zéro à une valeur non nulle, discernable de la valeur proche de zéro. Ce saut de tension est conservé dans sa forme lors de son passage au travers de l'élément d'isolation 14 et provoque la fermeture de l'interrupteur 123.

Le second signal est aussi constitué par un front montant ou descendant de tension relevant de la caractéristique électrique d'un comparateur à seuil. Ce saut de tension est conservé dans sa forme lors de son passage au travers de l'élément d'isolation 15 et provoque l'arrêt de la mesure de durée au niveau du moyen de gestion 13.

Les imperfections dues à la dispersion des optocoupleurs ou transformateurs mentionnées précédemment n'ont ici pas d'effet néfaste puisque la valeur absolue de la grandeur électrique n'est aucunement considérée.

Le moyen de conversion 16 se fonde sur une relation entre la durée Δt et l'impédance Z_{ligne}. Cette relation peut être établie mathématiquement en faisant des hypothèses sur l'intégrateur ou empiriquement.

Le moyen de conversion 16 peut être réalisé sous forme d'une table de conversion regroupant un nombre prédéfini de valeurs discrètes de durée Δt et leur conversion en valeur d'impédance Z_{ligne}. La durée Δt effectivement mesurée par le moyen de gestion 13 étant approximée par de la table la plus proche.

L'invention peut aussi être réalisée en considérant, comme grandeur électrique, le courant Iₑₓₜᵣ traversant le moyen de mesure 124, en général constitué par une résistance, au lieu de considérer la tension Uₑₓₜᵣ aux bornes de ce même moyen de mesure. La durée Δt est indépendamment représentative soit du courant Iₑₓₜᵣ, soit de la tension Uₑₓₜᵣ.

Dans un autre mode de réalisation, le moyen de conversion 16 peut permettre de convertir la valeur Δt en une tension ou en un courant permettant d'estimer la valeur de la tension Uextr aux bornes du moyen de mesure 124 ou du courant lextr traversant ce même moyen de mesure. Le dispositif devenant alors, suivant le cas, un moyen d'estimation de tension en bout de ligne ou de courant en bout de ligne.

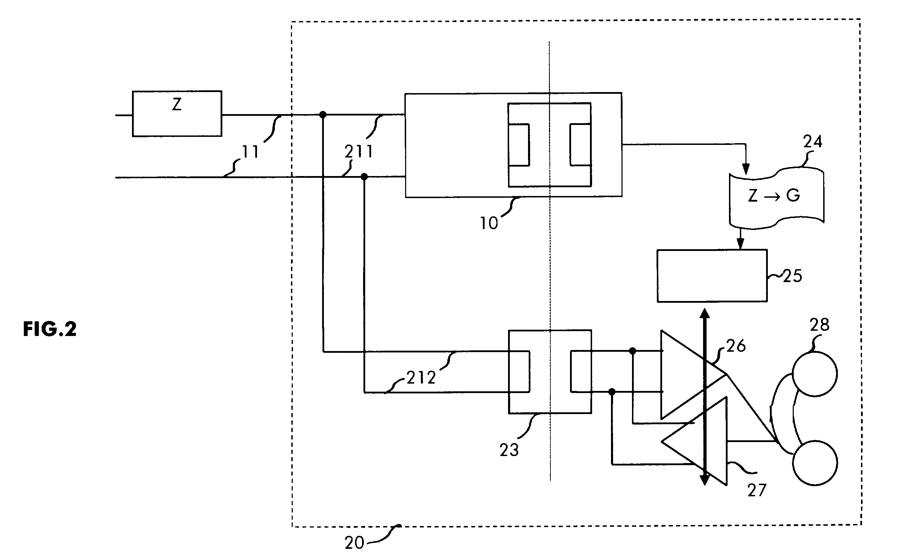

Une application du dispositif d'estimation d'impédance est représenté par la figure 2 qui illustre le mécanisme de régulation d'efficacité appliqué à un terminal de télécommunication analogique électriquement isolé 20. Ce terminal peut être un téléphone, un répondeur ou encore un fax. Le terminal 20 est relié à une ligne téléphonique 11. Le terminal 20 comprend un dispositif d'estimation d'impédance 10 selon l'invention auquel est relié une dérivation 211 de la ligne 11. Une autre dérivation 212 de la ligne 11 est relié par l'intermédiaire d'un transformateur 23 à des moyens d'amplification en réception 26 et des moyens d'amplification en émission 27. Les moyens d'amplification 26 et 27 sont reliés à l'interface 28 du terminal de télécommunication 20 qui est un combiné téléphonique si le terminal 20 est un téléphone. Le dispositif d'estimation d'impédance 10 est relié à un moyen de conversion 24 effectuant la conversion entre la valeur d'impédance de ligne Z_{ligne} livrée en sortie du dispositif 10 et une valeur de contrôle de gain G. Le moyen de conversion 24 est relié un moyen de contrôle de gain 25 imposant la valeur de contrôle de gain G aux moyens d'amplification 26 et 27.

Préférentiellement, le moyen de conversion 16 du dispositif d'estimation d'impédance et le moyen de conversion 24 du terminal peuvent être regroupé en un seul moyen de conversion convertissant directement la valeur de la durée At livrée par le dispositif d'estimation d'impédance en une valeur de contrôle de gain G.

Préférentiellement, le moyen de gestion 13 et le moyen de conversion 16 du dispositif d'estimation d'impédance ainsi que le moyens de contrôle 25 et le moyen de conversion 24 peuvent tous être regroupés au sein d'une CPU.

Lors de la prise de ligne, c'est à dire le décrochage du combiné 28, une estimation d'impédance de ligne est effectué par le dispositif 10. Une fois la valeur d'impédance de ligne déterminée, l'interrupteur 123 du dispositif d'estimation d'impédance est à nouveau mis en position ouverte. La valeur d'impédance est livrée au moyen de conversion 24 qui indique la valeur de contrôle de gain à appliquer par le moyen de contrôle 25 aux moyens d'amplification 26 et 27. La valeur de contrôle de gain sera appliquée lors de la durée complète de la communication au signal téléphonique échangé sur la ligne 11 une fois que la communication aura été établie.

D'autres applications du dispositif d'estimation d'impédance sont envisageables telles que, par exemple, un appareil de mesure et d'affichage de l'impédance d'une ligne téléphonique.

## Revendications

1. Dispositif d'estimation d'impédance (10) d'une ligne téléphonique destiné à être connecté à une extrémité de ladite ligne, une grandeur électrique de valeur connue étant appliquée à l'autre extrémité de ladite ligne, ledit dispositif comprenant un moyen de traitement (12) relié à un moyen de gestion (13) au travers de moyens d'isolation électrique (14, 15),
caractérisé en ce que
ledit moyen de gestion (13) est destiné à délivrer un premier signal audit moyen de traitement (12) déterminant l'instant de début d'une mesure de durée par ledit moyen de gestion (13) correspondant avec l'instant de début d'application de ladite grandeur électrique audit moyen de traitement (12), ledit moyen de traitement(12) comprenant un premier circuit (121) présentant une réponse univoque à ladite grandeur électrique en fonction du temps, un comparateur (122) comparant ladite réponse par rapport à un seuil prédéfini et générant un second signal en direction dudit moyen de gestion (13) lorsque ledit seuil est atteint,
ledit second signal déterminant l'instant de fin de ladite mesure de temps, ledit temps mesuré étant représentatif de ladite impédance de ligne.

2. Dispositif d'estimation d'impédance (10) selon la revendication 1,
caractérisé en ce que
ledit circuit (121) présentant une réponse univoque à ladite grandeur électrique en fonction du temps est constitué par un intégrateur.

3. Dispositif d'estimation d'impédance (10) selon l'une des revendications 1 ou 2,
caractérisé en ce que
ledit premier signal est un front de courant ou de tension, transmis par ledit moyen de gestion (13) au travers d'un desdits moyens d'isolation électrique (14), fermant un interrupteur (123) afin d'établir un contact entre ladite ligne et ledit moyen de traitement (12).

4. Dispositif d'estimation d'impédance (10) selon l'une des revendications 1 ou 2,
caractérisé en ce que
ledit second signal est un front de courant ou de tension transmis par ledit comparateur (122) au travers d'un desdits moyens d'isolation électrique (15).

5. Dispositif d'estimation d'impédance (10) selon l'une des revendications 1 à 4,
caractérisé en ce que
ledit temps mesuré est converti en ladite impédance de ligne à l'aide d'une table de conversion (16) regroupant un nombre prédéfini de valeurs discrètes de temps mesurés ainsi que l'impédance leur correspondant.

6. Terminal de télécommunication analogique (20) destiné à être relié à une ligne téléphonique (11), ledit terminal (20) disposant de moyens de contrôle (25) pour appliquer une valeur de contrôle de gain couplé à ladite ligne, ledit terminal (20) étant isolé électriquement de ladite ligne par un élément d'isolation (23),
caractérisé en ce que
ledit terminal (20) comprend un dispositif d'estimation d'impédance (10) de ladite ligne (11) selon l'une des revendications 1 à 4, ladite impédance estimée étant convertie en ladite valeur de contrôle de gain par un moyen de conversion (24).

7. Terminal de télécommunication analogique (20) destiné à être relié à une ligne téléphonique (11), ledit terminal (20) disposant de moyens de contrôle (25) pour appliquer une valeur de contrôle de gain couplé à ladite ligne, ledit terminal (20) étant isolé électriquement de ladite ligne par un élément d'isolation (23),
caractérisé en ce que
ledit terminal (20) comprend un dispositif d'estimation d'impédance (10) de ladite ligne (11) selon l'une des revendications 1 à 4, ledit temps mesuré étant converti en ladite valeur de contrôle de gain par un moyen de conversion (16 + 24).

8. Terminal de télécommunication analogique selon l'une des revendications 6 ou 7,
caractérisé en ce que
ledit moyen de contrôle (25) et ledit moyen de conversion (24) dudit terminal ainsi que ledit moyen de gestion (13) et ledit moyen de conversion (16) dudit dispositif sont implantés dans une même unité de traitement.
